# EUROPEAN PATENT SPECIFICATION

(11) **EP 1 719 418 B1**
(45) Date of publication and mention of the grant of the patent: **06.06.2012**
(21) Application number: 06113110.8
(22) Date of filing: 26.04.2006
(51) Int. Cl.: A23L 1/212, A23L 1/39, A23L 3/36

(54) **Deep-frozen finished product of the type soup, purée or sauce and method for the manufacture of such a deep-frozen finished product**
Tiefgekühlte Produkte vom Typ Suppe, Puree oder Sosse, und deren Herstellungsverfahren
Produits congelés du type soupe, purée ou sauce et leur procédé de préparation

(30) Priority: 04.05.2005 BE 200500225
(43) Date of publication of application: 08.11.2006
(73) Proprietor: Crop's NV, 8710 Ooigem (BE)
(72) Inventor: Maddens, Maarten, 8710, Ooigem (BE)
(74) Representative: Ostyn, Frans

(56) References cited:
- GB-A- 1 016 574
- GB-A- 2 025 197
- US-A1- 2003 180 430
- US-A1- 2004 224 072

## Description

The invention relates to a method for the manufacture of a deep-frozen finished product of the type soup, purée or sauce, and further relates to a deep-frozen finished product of the type soup, purée or sauce, wherein the ingredients of the deep-frozen finished product comprise deep-frozen ingredients.

A deep-frozen finished product means a product, consisting of a package and a food, which is stored in a deep-freeze, with the consumer being able with a limited number of actions to process the food to a food ready for consumption.

It is known to produce deep-frozen soups, soups in Tetrabrik, (ultra)fresh soups, etc. by a method in which the ingredients, *inter alia* vegetables, are cooked by the producer.

The disadvantage of this method, however, is that the ingredients of the soup are cooked a second time when they are made ready by the consumer. This results in a loss of colour, texture, odour, flavour and vitamin content of the ingredients.

US 2003/0185944 describes a kit for the preparation of a meal comprising individually deep-frozen (IQF or "Individually quick frozen") prepared meat or an IQF vegetable, or both, and a dry flavour-enhancing powder, where the IQF prepared meat or the IQF vegetable, or both, are not cooked in a liquid before they are packaged. The kit is furthermore almost free of liquid or frozen liquid. The vegetables used are first blanched with boiling water so that the enzymes are deactivated. After blanching the vegetables are treated with an IQF deep-freezer in order to produce deep-frozen food of high quality. In one of the examples a soup is described in which dry flavour-enhancing powders are vacuum-packed together with IQF vegetables and IQF potatoes.

The disadvantage of such kits is that water has to be added in order to make the meal ready.

GB 2 025 197 describes a method for the preparation of deep-frozen meals of the hotpot or casserole type, and such a meal. The meal mix consists of deep-frozen vegetables which are previously blanched, and are precooked to a greater or lesser degree together with the other ingredients, such as potatoes, peas, lentils and other vegetables. In addition, dry thickening agents, which already comprise flavour- and aroma-enhancing components, are added to this mix. Fats can also be added to this dry thickening agents mix. The dry ingredients of the mix, such as potato peelings, pea powder and other starch, are mixed with one part of water in order to obtain separate granules. These granules are mixed with precooked potatoes, or depending on taste with rice or pasta and with the deep-frozen vegetables, with the proportion of dry matter relative to the vegetables being between 15 and 25 % dry mix. In one of the recipes for making a water-based French beans meal it is specified that the mixing process is completed when the ingredients are uniformly distributed among each other and the binding agent used in this recipe adheres to the vegetables.

Here too the disadvantage is that water has to be added in order to make the meal ready.

The object of the invention is thus to provide a method for the manufacture of a deep-frozen finished product of the type soup, purée or sauce, wherein the ingredients of the deep-frozen finished product comprise deep-frozen ingredients, and wherein a deep-frozen finished product is obtained wherein the consumer can make the deep-frozen finished product ready for consumption (consumable) in a simple manner, without adding additional ingredients, and furthermore the deep-frozen finished product only once has to undergo a cooking heat treatment in order to make the deep-frozen finished product ready for consumption.

This object of the invention is achieved by providing a method for the manufacture of a deep-frozen finished product of the type soup, purée or sauce wherein the ingredients of the deep-frozen finished product comprise deep-frozen ingredients and wherein a part of the deep-frozen ingredients are cold processed to a cold emulsion which is a purée having a temperature between 0°C and 5°C and wherein during this cold processing chilled water and for other liquid refrigerated-fresh ingredients with a maximum temperature of 5°C are added.

By the cold mixing of the deep-frozen ingredients to a cold emulsion which is a purée, a deep-frozen finished product of the type soup, sauce or purée is obtained which can be simply prepared by the consumer to ingredients ready for consumption, without additional ingredients such as water having to be added. A soup, purée or sauce is thus obtained which is already in the final form with regard to liquidity, consistency, flavour and ingredients.

In a preferred method according to the invention, the cold emulsion which is a purée has a temperature between 0 °C and 5 °C.

As a result one can be sure that the microbiology of the deep-frozen finished product remains guaranteed.

In a preferred method according to the invention, during the cold mixing of the deep-frozen ingredients to a cold emulsion which is a purée, chilled water and/or other refrigerated-fresh ingredients with a maximum temperature of 5°C are added.

In the cold state the binding agent acts as a stabilizer for the purpose of preventing separation of the soup, sauce or purée into a liquid and a solid phase. The binding agent also has the function of making the homogenization of the product proceed better during the preparation phase of the cold pumpable mass. In the warm state the binding agent ensures that the binding capabilities are retained when the deep-frozen finished product undergoes a cooking heat treatment.

In a more preferred method according to the invention, the binding agent is a natural binding agent.

In a preferred method according to the invention, the other part of the deep-frozen ingredients is added to the cold emulsion which is a purée.

In an advantageous method according to the invention, the deep-frozen ingredients consist mainly of IQF ingredients.

In a preferred method according to the invention, the deep-frozen and/or IQF ingredients comprise frozen-fresh vegetables.

Frozen-fresh vegetables means vegetables which are blanched after (as short as possible a period after) harvesting and are then immediately frozen.

In an advantageous method according to the invention, the cold emulsion which is a purée and any IQF ingredients added thereto are packaged in a steam-cook package. A steam-cook package has the major advantage that an increased pressure can be created in the package, so that the boiling point is lowered and the cooking time is reduced, so that cooking is done by the known principle of the pressure cooker. In this way a healthy soup, sauce or purée which can be quickly prepared by the consumer is obtained which can stand comparison with a traditional home-made soup, with maximum retention of the odour, colour, texture, flavour and vitamin content of the ingredients. Another advantage of a steam-cook package is that the contents of the package can be cooked and eaten in the same package.

It is a further object of the invention is to provide a deep-frozen finished product of the type soup, purée or sauce, wherein the consumer can make the deep-frozen finished product ready for consumption (consumable) in a simple manner, without adding additional ingredients, and furthermore to provide a deep-frozen finished product which only once has to undergo a cooking heat treatment in order to make the deep-frozen finished product ready for consumption.

This object of the invention is achieved by providing a deep-frozen finished product of the type soup, purée or sauce in which the ingredients of the deep-frozen finished product comprise deep-frozen ingredients, that is manufactured by a method according to the invention as described above.

The following detailed description and the examples further elucidate the aforesaid characteristics and advantages of deep-frozen finished products according to the invention. The purpose of these examples and the associated description is merely to elucidate the general principles of this invention, so that nothing in this description can be construed as a limitation of the scope of the invention or of the patent rights demanded in the claims.

In a deep-frozen finished product of the type soup, purée or sauce according to the invention, the ingredients of the deep-frozen finished product comprise deep-frozen ingredients. In addition the ingredients can also comprise refrigerated-fresh ingredients with a maximum temperature of 5 °C. Some of the deep-frozen ingredients, with or without the refrigerated-fresh ingredients, are cold mixed to a cold emulsion which is a purée. In addition a binding agent, preferably a natural binding agent, which has binding properties in the cold and warm state can also be added. Such a binding agent has the characteristic that the binding pattern is developed from a temperature of 20 °C upwards, and that complete binding occurs from about 65 °C upwards, and it retains its binding capabilities if it is further heated to 100 °C. An example of such a binding agent comprises *inter alia* modified starch (E1414), stabilizers (guar (E412) and xanthan (E415)). During the processing of the deep-frozen ingredients chilled water can furthermore be added, in order to keep the temperature of the cold pumpable mass as low as possible. In addition to the chilled water, refrigerated-fresh ingredients such as cream, milk, etc., can be processed in the cold pumpable mass. Such products are above all added for the preparation of sauces. These refrigerated-fresh ingredients can also be added in the preparation of certain soups or purées, however.

The cold emulsion which is a purée which is obtained is a liquid, sometimes pasty mass (purée). The temperature of the cold emulsion which is a purée is between 0 °C and 5°C, preferably as close as possible to 0 °C, in order to obtain a deep-frozen finished product with a guaranteed microbiology.

The deep-frozen ingredients can consist both of block-frozen and of IQF ingredients. This last is to be preferred. The abbreviation IQF stands for "Individual Quick Frozen" and indicates a freezing process where the ingredients are frozen individually in a very rapid manner (a few seconds to a maximum of a few minutes) at a temperature down to - 40 °C. This process is to be compared with a freezing process which takes place at a temperature down to - 18°C, where ingredients are frozen portioned in a freezer, which takes a few hours and results in a coherent block. The major advantage of the use of IQF foods is that there is maximum retention of vitamins, texture, odour and flavour as a result of minimum damage to the cell structure during the rapid conversion of water to ice crystals in the freezing process.

Any other part of the deep-frozen ingredients (which may or may not have to be added, depending on the formulation) is added to the cold emulsion which is a purée. Here too IQF ingredients are preferably used. These ingredients which are added may be either in the form of vegetables or in the form of meat, chicken, etc. In the same way a complete meal soup can for example be obtained. Deep-frozen ingredients can also be added when sauces or purées are being made, for example in the preparation of a mushroom sauce or the preparation of a broccoli purée with small pieces of bacon.

The deep-frozen and/or IQF ingredients preferably comprise frozen-fresh vegetables. As already stated above, frozen-fresh vegetables means vegetables which are preferably first blanched very soon after harvesting, then deep-frozen. Blanching means subjecting a food to a brief heat treatment at a temperature which is usually below 100 °C, preferably between 75 °C and 90 °C, for a period between 30 seconds and 2.5 minutes, depending on the vegetable to be blanched, after which the food is rinsed with cold water. The blanching process is carried out in order to inactivate the enzymes which reduce the quality and the shelf life of the food, and in order to achieve microbiological sterilization.

The cold emulsion which is a purée prepared, with or without the added IQF ingredients, is then packaged in a steam-cook package, after which this is frozen in a rapid manner (statically) from a temperature between 0 °C and 5 °C to a temperature of-18 °C, so that a deep-frozen finished product is obtained. The steam-cook package is suitable for heating up in a microwave oven. A steam-cook package consists of a bowl or dish which is covered and sealed with a film, in which operation a certain overpressure, generated by the steam, can escape along one or more channels in the film. Through the creation of an increased pressure in the package the boiling point is lowered and the cooking time is reduced, and cooking is done by the known principle of the pressure cooker. In this way a healthy soup, sauce or purée which can be quickly prepared by the consumer is obtained which can stand comparison with a traditional home-made soup, with maximum retention of the odour, colour, texture, flavour and vitamin content of the ingredients, and as a result of which, among other things, flavour enhancers are superfluous, as is the case for example in US 2003/0185944 and GB 2 025 197.

### Example 1 : Preparation of grain mustard sauce

**Table 1 : Composition of grain mustard sauce**

| Ingredients | | % |
|---|---|---|
| cream 35% (3°C) | | 41.93 |
| semi-skimmed milk (3°C) | | 30.29 |
| chilled water (0 - 3°C.) | | 15.15 |
| grain mustard paste | | 12.63 |
| | margarine (palm fat & rapeseed / sunflower oil) | |
| | shallot | |
| | maize starch (E1422) | |
| | vinegar | |
| | mustard seed | |
| | rice starch | |
| | salt | |
| | lemon juice | |
| Total | | 100 |

The ingredients of the grain mustard paste and the chilled water are cold processed to a cold, smooth cold emulsion which is a purée. The cream and the semi-skimmed milk are then added and mixed. The whole is packaged in a steam package and is (statically) frozen to a temperature of about - 18 °C, so that a deep-frozen finished product is obtained. The deep-frozen finished product should be steam-cooked by the consumer for about 9 minutes at 750 Watt in a microwave oven.

### Example 2 : Preparation of tomato soup with poultry meat balls

**Table 2 : Composition of tomato soup with poultry meat balls**

| Ingredients | | | % |
|---|---|---|---|
| soup base | | | 82.53 |
| | chilled water (0 - 3°C) | 42.60 | |
| | tomato pulp | 14.82 | |
| | chicken stock (IQF) | 5.00 | |
| | onion cube (grilled) (IQF) | 3.95 | |
| | carrot cube (IQF) | 3.67 | |
| | white celery (IQF) | 2.35 | |
| | potato chunks (blanched) (IQF) | 2.22 | |
| | chicken base (3°C) | 0.75 | |
| | white pepper | 0.01 | |
| | culinary cream 20% (3°C) | 1.72 | |
| | herb mixture + binding agent | 5.34 | |
| | parsley | 0.1 | |
| tomato cube (IQF) | | | 7.47 |
| meat balls (IQF) | | | 10.00 |
| Total | | | 100 |

The ingredients of the soup base, except the cream and the parsley, are cold processed to a cold emulsion which is a purée. The cream and the parsley are then mixed in, and next the tomato cube and the meat balls. The whole is then packaged in a steam package and (statically) frozen to a temperature of about - 18 °C, so that a deep-frozen finished product is obtained. The deep-frozen finished product should be steam-cooked by the consumer for about 9 minutes at 750 Watt in a microwave oven.

### Example 3 : Preparation of minestrone soup with bacon

**Table 3 : Composition of minestrone with bacon**

| Ingredients | | | % |
|---|---|---|---|
| soup base | | | 60.59 |
| | chilled water (0 - 3°C.) | 89.54 | |
| | tomato purée | 4.93 | |
| | herb mixture | 5.53 | |
| bacon strips (IQF) | | | 8.00 |
| carrot cube (IQF) | | | 4.49 |
| green beans (IQF) | | | 3.49 |
| paprika cube (IQF) | | | 3.49 |
| onion cube (IQF) | | | 3.49 |
| chopped blanched celery (IQF) | | | 3.49 |
| tomato cube (IQF) | | | 2.99 |
| borlotti beans (IQF) | | | 2.99 |
| fennel cube (IQF) | | | 2.49 |
| turnip cube (IQF) | | | 2.49 |
| spinach flakes (IQF) | | | 2.00 |
| Total | | | 100 |

The ingredients of the soup base are cold processed to a cold emulsion which is a purée. The other IQF ingredients are then added. The whole is packaged in a steam package and (statically) frozen to a temperature of about - 18 °C, so that a deep-frozen finished product is obtained. The deep-frozen finished product should be steam-cooked by the consumer for about 9 minutes at 750 Watt in a microwave oven.

### Example 4 : Preparation of broccoli vegetable purée

**Table 4 : Composition of broccoli vegetable purée**

| Ingredients | % |
|---|---|
| broccoli rosettes (IQF) | 50.66 |
| potato chunks (IQF) | 13.12 |
| semi-skimmed milk (3°C) | 25.4 |
| vegetable bouillon (IQF tablets) | 5.00 |
| vegetable oil with butter aroma | 5.00 |
| herb mixture | 0.82 |
| Total | 100 |

The ingredients of the vegetable purée are cold processed to a cold emulsion which is a purée which is put into a steam package and (statically) frozen to a temperature of about - 18 °C, so that a deep-frozen finished product is obtained. The deep-frozen finished product should be steam-cooked by the consumer for about 8 - 9 minutes at 750 Watt in a microwave oven.

## Claims

1. Method for the manufacture of a deep-frozen finished product of the type soup, purée or sauce, the ingredients of the deep-frozen finished product comprising deep-frozen ingredients, **characterized in that** a part of the deep-frozen ingredients are cold processed to a cold emulsion which is a purée having a temperature between 0°C and 5°C, wherein during this cold processing chilled water and/or other liquid refrigerated-fresh ingredients with a maximum temperature of 5°C are added.

2. Method according to claim 1, **characterized in that** during the cold processing of the deep-frozen ingredients, a binding agent is added which has binding properties in the cold and warm state.

3. Method according to claim 2, **characterised in that** the binding agent is a natural binding agent.

4. Method according to any one of claims 1 to 3, **characterised in that** the said cold processing consists of mixing the said part of the deep-frozen ingredients.

5. Method according to any one of claims 1 to 4, **characterized in that** the method comprises the step of adding the other part of the deep-frozen ingredients to the obtained cold emulsion which is a purée.

6. Method according to any one of claims 1 to 5, **characterized in that** in this method, mainly IQF ingredients are used as the deep-frozen ingredients.

7. Method according to claim 6, **characterised in that** in this method, the deep-frozen and/or IQF ingredients include frozen-fresh vegetables being vegetables which are blanched after (as short as possible a period after) harvesting and are then immediately frozen.

8. Method according to any one of claims 1 to 7, **characterized in that** the method comprises the step of packaging the cold pumpable emulsion which is a purée and any IQF ingredients added thereto in a steam-cook package.

9. Method according to any one of claims 1 to 8, **characterized in that** the method includes the following steps:
- cold mixing the stated part of the deep-frozen ingredients to a cold emulsion which is a purée having a temperature between 0 °C and 5 °C, wherein chilled water and/or other liquid refrigerated-fresh ingredients with a maximum temperature of 5 °C, and any binding agent, which has binding properties both in the cold and in the warm state, are added during the processing;
- adding any other part of the deep-frozen ingredients to this cold pumpable emulsion which is a purée;
- putting the whole into a steam-cook package;
- freezing the filled steam-cook package to a temperature of -18 °C.

## Patentansprüche

1. Verfahren zur Herstellung eines Tiefkühl-Fertigprodukts in der Art einer Suppe, eines Pürees oder einer Sauce, wobei die Zutaten des Tiefkühl-Fertigprodukts tiefgekühlte Zutaten umfassen, **dadurch gekennzeichnet, dass** ein Teil der tiefgekühlten Zutaten zu einer kalten Emulsion kalt verarbeitet werden, die ein Püree mit einer Temperatur von zwischen 0°C und 5°C ist, wobei bei dieser Kaltverarbeitung gekühltes Wasser und/oder andere flüssige, kühlfrische Zutaten mit einer Höchsttemperatur von 5°C hinzugefügt werden.

2. Verfahren nach Anspruch 1, **dadurch gekennzeichnet, dass** bei der Kaltverarbeitung der tiefgekühlten Zutaten ein Bindemittel hinzugefügt wird, das im kalten und warmen Zustand bindende Eigenschaften aufweist.

3. Verfahren nach Anspruch 2, **dadurch gekennzeichnet, dass** das Bindemittel ein natürliches Bindemittel ist.

4. Verfahren nach einem der Ansprüche 1 bis 3, **dadurch gekennzeichnet, dass** die Kaltverarbeitung im Vermengen des Teils der tiefgekühlten Zutaten besteht.

5. Verfahren nach einem der Ansprüche 1 bis 4, **dadurch gekennzeichnet, dass** das Verfahren den Schritt des Hinzufügens des anderen Teils der tiefgekühlten Zutaten zur erhaltenen kalten Emulsion, die ein Püree ist, umfasst.

6. Verfahren nach einem der Ansprüche 1 bis 5, **dadurch gekennzeichnet, dass** in diesem Verfahren hauptsächlich IQF-Zutaten als tiefgekühlte Zutaten verwendet werden.

7. Verfahren nach Anspruch 6, **dadurch gekennzeichnet, dass** in diesem Verfahren die tiefgekühlten und/oder IQF-Zutaten gefrierfrisches Gemüse umfassen, das Gemüse ist, das (so schnell wie möglich) nach der Ernte blanchiert und dann unverzüglich gefrostet wird.

8. Verfahren nach einem der Ansprüche 1 bis 7, **dadurch gekennzeichnet, dass** das Verfahren den Schritt des Abpackens der kalten, pumpfähigen Emulsion, die ein Püree ist, und jeglicher hinzugefügter IQF-Zutaten in eine Dampfgarpackung umfasst.

9. Verfahren nach einem der Ansprüche 1 bis 8, **dadurch gekennzeichnet, dass** das Verfahren folgende Schritte umfasst:
- kaltes Vermengen des genannten Teils der tiefgekühlten Zutaten zu einer Emulsion, die ein Püree mit einer Temperatur von zwischen 0°C und 5°C ist, wobei gekühltes Wasser und/oder andere flüssige, kühlfrische Zutaten mit einer Höchsttemperatur von 5°C und irgendein Bindemittel, das sowohl im kalten als auch im warmen Zustand bindende Eigenschaften aufweist, bei der Verarbeitung hinzugefügt werden;
- Hinzufügen jeglichen anderen Teils der tiefgekühlten Zutaten zu dieser kalten, pumpfähigen Emulsion, die ein Püree ist;
- Abpacken des Ganzen in eine Dampfgarpackung;
- Gefrieren der abgefüllten Dampfgarpackung auf eine Temperatur von -18°C.

## Revendications

1. Procédé de fabrication d'un produit fini surgelé de type soupe, purée ou sauce, les ingrédients du produit fini surgelé comprenant des ingrédients surgelés, **caractérisé en ce qu'**une partie des ingrédients surgelés est traitée à froid pour former une émulsion froide qui est une purée possédant une température comprise entre 0 et 5°C, dans lequel de l'eau réfrigérée et/ou d'autres ingrédients frais réfrigérés liquides à une température maximum de 5°C sont ajoutés pendant ce traitement à froid.

2. Procédé selon la revendication 1, **caractérisé en ce qu'**un agent liant est ajouté pendant le traitement à froid des ingrédients surgelés, lequel présente des propriétés liantes à l'état froid et chaud.

3. Procédé selon la revendication 2, **caractérisé en ce que** l'agent liant est un agent liant naturel.

4. Procédé selon l'une quelconque des revendications 1 à 3, **caractérisé en ce que** ledit traitement à froid consiste à mélanger ladite partie des ingrédients surgelés.

5. Procédé selon l'une quelconque des revendications 1 à 4, **caractérisé en ce que** le procédé comprend l'étape consistant à ajouter l'autre partie des ingrédients surgelés à l'émulsion froide obtenue qui est une purée.

6. Procédé selon l'une quelconque des revendications 1 à 5, **caractérisé en ce que** dans ce procédé, des ingrédients surgelés séparément sont principalement utilisés comme ingrédients surgelés.

7. Procédé selon la revendication 6, **caractérisé en ce que** dans ce procédé, les ingrédients surgelés et/ou surgelés séparément comprennent des légumes frais surgelés qui sont des légumes blanchis après (une période la plus brève possible) la récolte et sont ensuite immédiatement surgelés.

8. Procédé selon l'une quelconque des revendications 1 à 7, **caractérisé en ce que** le procédé comprend l'étape consistant à emballer l'émulsion froide pompable qui est une purée et tout ingrédient surgelé séparément ajouté à celle-ci dans un emballage de cuisson à la vapeur.

9. Procédé selon l'une quelconque des revendications 1 à 8, **caractérisé en ce que** le procédé comprend les étapes suivantes consistant à :
- mélanger à froid la partie fixée des ingrédients surgelés à une émulsion froide qui est une purée présentant une température comprise entre 0 et 5°C, dans lequel de l'eau réfrigérée et/ou d'autres ingrédients frais réfrigérés liquides à une température maximum de 5°C, et tout agent liant qui présente des propriétés liantes à la fois à l'état froid et à l'état chaud, sont ajoutés pendant le traitement ;
- ajouter toute autre partie des ingrédients surgelés à cette émulsion froide pompable qui est une purée ;
- mettre l'ensemble dans un emballage de cuisson à la vapeur;
- surgeler l'emballage de cuisson à la vapeur rempli à une température de -18°C.
